# EUROPÄISCHE PATENTSCHRIFT

(11) **EP 0 489 077 B1**
(45) Veröffentlichungstag und Bekanntmachung des Hinweises auf die Patenterteilung: **01.06.1994**
(21) Anmeldenummer: 90912911.6
(22) Anmeldetag: 23.08.1990
(51) Int. Cl.: H02K 5/22

(54) **ELEKTROMOTOR IN GESCHLOSSENER BAUART**
ELECTRIC MOTOR WITH WATERTIGHT CONSTRUCTION
MOTEUR ELECTRIQUE D'UNE CONSTRUCTION DE TYPE FERME

(30) Priorität: 25.08.1989 EP 89115738; 25.08.1989 DE 8910214 U; 17.08.1990 DE 9011962 U; 17.08.1990 EP 90115826
(43) Veröffentlichungstag der Anmeldung: 10.06.1992
(73) Patentinhaber: SIEMENS AKTIENGESELLSCHAFT, 80333 München (DE)
(72) Erfinder: ADAM, Peter, D-8706 Höchberg (DE); SEUFFERT, Werner, D-8722 Bergrheinfeld (DE); HOFMANN, Manfred, D-8702 Hettstadt (DE); MÜLLER, Hans-Joachim, D-8736 Burkardroth (DE)
(86) Internationale Anmeldenummer: EP9001408
(87) Internationale Veröffentlichungsnummer: WO9103095

(56) Entgegenhaltungen:
- EP-A- 0 219 681
- FR-A- 2 530 885
- US-A- 3 535 564
- PATENT ABSTRACTS OF JAPAN Vol. 5, No. 129 (E-70)(801) 19 August 1981, & JP-A-56 66153 (HITACHI) 04 June 1981
- PATENT ABSTRACTS OF JAPAN, Vol. 8, No. 194 (E-264)(1631) 06 September 1984, & JP-A-59 83553 (HITACHI) 15 May 1984

## Beschreibung

Die Erfindung bezieht sich auf einen Elektromotor in geschlossener Bauart gemäß Oberbegriff des Anspruchs 1; ein derartiger Elektromotor ist aus der EP-A-0 219 681 bekannt.

Im bekannten Fall der EP-A-0 219 681 ist nach einer Ausgestaltung eine vorfertigbare Montageeinheit aus Bürstenhalterung und Dichtung dadurch vorgesehen, daß die Dichtung mit der Bürstenhalterung durch Verklemmen und/oder Verrasten bzw. Verkleben oder Verschweißen vormontiert verbunden wird. Zur Vermeidung eines undefinierten Zusammenquetschens bzw. seitlichen Wegdrückens der Dichtung sind an die die Dichtung zusammendrückenden und dabei gegenseitig abzudichtenden Stirnflächen axial voreinander beim gegenseitigen Verspannen zur Anlage kommende Puffer vorgesehen bzw. ist die Dichtung scheibenförmig mit in Umfangsrichtung schlitzförmigen Paßöffnungen versehen, in die an die Stirnflächen angeformte Führungsnasen beim Verspannen der abzudichtenden Bauteile mit der zwischenliegenden Dichtung axial eingreifen.

Der konstruktive und insbesondere montagetechnische Aufwand zur Herstellung eines feuchtigkeitsdicht abgeschlossenen Elektromotors der eingangs genannten Art kann nach der Erfindung durch die Lehre des Anspruchs 1 wesentlich gemindert werden; vorteilhafte Ausgestaltungen der Erfindung sind jeweils Gegenstand der Unteransprüche.

Durch die erfindungsgemäße Maßnahme ist mit einem als einziges Bauteil herstellbares und in einem Arbeitsgang montierbares Guß- bzw. Spritzgußteil sowohl die dichtende Herausführung der Anschlußleitungen aus dem Motorgehäuse als auch dessen Abdichtung gegenüber dem stirnseitig gegengelegten Lagerschild mit geringem Aufwand und bei gewährleisteter Lagefixierung ohne Gefahr eines undefinierten Verquetschens bzw. Verschiebens der Dichtung beim Anbringen des Lagerschildes am Motorgehäuse möglich; dabei kann in vorteilhafter Weise eine am Fuße der Ringnut umlaufende Wulsterhöhung dazu dienen, die beim Montieren des Lagerschildes gegen das Motorgehäuse in den am Nutgrund anliegenden Bodenteil des Dichtringes einzudrücken und diesen zusätzlich im Sinne einer dichten Anlage zu quetschen.

Im Sinne einer weiteren Montagevereinfachung ist nach einer Ausgestaltung der Erfindung vorgesehen, die Bürstenplatte mit der Isolierstoff-Durchführung und dem Dichtring an dem Lager- schild, insbesondere im Sinne einer vormontierbaren Bauteil- einheit, zu fixieren; dabei greift in vorteilhafter Weise die Isolierstoff-Durchführung in eine stirnseitig offene Einstecköffnung an einem axial vorstehenden Anlagerand des Lagerschildes kraftschlüssig ein.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: in einem axialen Längsschnittbild einen Kommutatormotor mit am rechten Lagerschild fixierter Bürstenplatte mit Dichtring und Isolierstoff-Durchführung,
- FIG 2: eine stirnseitige Draufsicht auf die Bürstenplatte mit daran vormontiertem Dichtring und vormontierter Isolierstoff-Durchführung gemäß FIG 1,
- FIG 3: einen radialen Längsschnitt durch die Bürstenplatte gemäß FIG 2 im Schnittverlauf III-III.

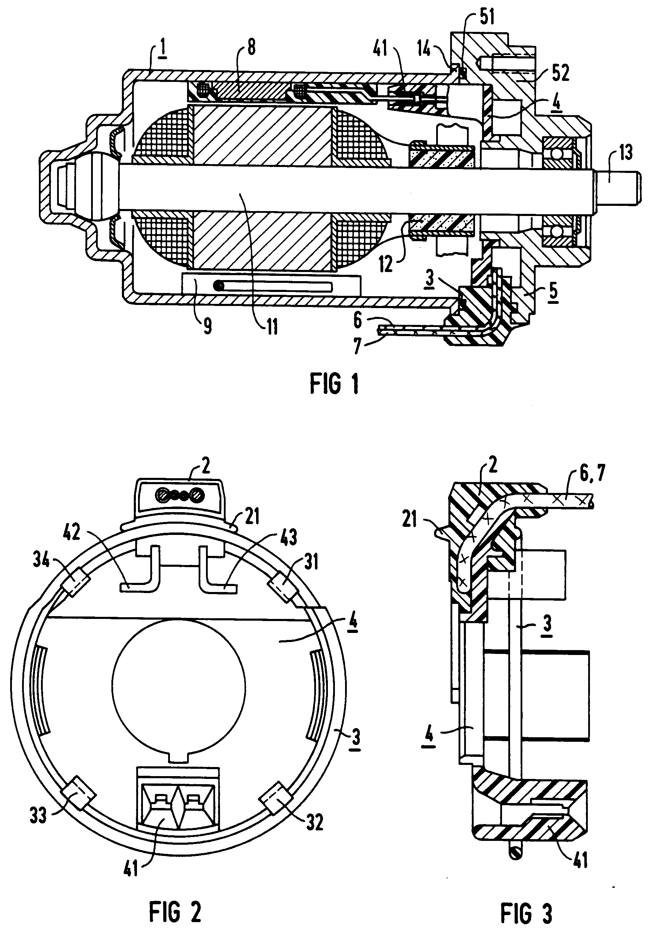

FIG 1 zeigt einen permanentmagnetisch erregten Gleichstrom- Kleinmotor mit einem topfförmigen Motorgehäuse 1 und an dessen Innenumfang gehalterten Teilenschalenmagneten 9 sowie auf einer Rotorwelle 11 angeordnetem Rotor mit einem Kommutator 12. Die rechte offene Stirnseite des Motorgehäuses 1 ist durch ein Lagerschild 5 verschlossen, aus dem die Rotorwelle 1 mit einem Exzenter-Antriebswellenende 13 herausragt, das z.B. zum Antrieb eines Stößels einer an das rechte axiale Ende des Kommutatormotors angeflanschten Hydraulikpumpe dient.

Das Motorgehäuse 1 weist an seinem rechten Ende einen radial nach außen abgebogenen Anlagerand 14 auf, der zur axialen und radialen Fixierung des Lagerschildes 5 am Motorgehäuse 1 und gleichzeitig als Anlagerand für einen Dichtring 3 zum feuchtigkeitsdichten Abschluß zwischen Motorgehäuse 1 einerseits und Lagerschild 5 andererseits dient. Elektrische Anschlußleitungen 6,7, die von außen in das Innere des Motorgehäuses, führen und insbesondere zum Anschluß an elektrische Anschlußpunkte auf einer Bürstenplatte 4 bzw. einer zwischen den tangentialen Lücken der Teilschalenmagnete 9 angeordneten Dreherkennung 8 dienen, sind in eine Isolierstoff-Durchführung 2 eingegossen, die in eine axial stirnseitige Einstecköffnung eines axial gegen das Motorgehäuse ragenden Anlagerand 52 des Lagerschildes 5 eingreift.

Wie insbes. aus FIG 2,3 ersichtlich,-ist im Sinne einer vormontierbaren Bauteileinheit die Isolierstoff-Durchführung 2 mit den eingespritzten elektrischen Anschlußleitungen 6,7 direkt an die Bürstenplatte 4 angespritzt. An die Isolierstoff-Durchführung 2 ist einstückig gleichzeitig der umlaufende Dichtring 3 angegossen, der in den tangentialen Bereichen außerhalb der Isolierstoff-Durchführung 2 über Halterungsstege 31,34 in Abstand zur Grundplatte der Bürstenplatte 4 derart gehalten ist, daß der Dichtring 3 beim Einbau der Bürstenplatte 4 in den Lagerschild 5 ohne große Richtarbeiten in seiner endgültigen Dichtlage zur Anlage kommt. Als Fixierungshilfe für den Dichtring 3 ist dabei in dem Lagerschild 5 eine umlaufende Ringnut 51 vorgesehen. An die Bürstenplatte 4 sind u.a. weiterhin Aufnahmen 42,43 für einhangbare Bürstenhalter und eine Aufnahme für einen Steckeranschluß der Dreherkennung 8 angespritzt bzw. angegossen. Zweckmäßigerweise bestehen die Bürstenplatte 4 aus einem Polyamid und die Isolierstoff-Durchführung 2 sowie der Dichtungsring 3 mit seinen Halterungsstegen 31-34 aus einem Elastomer.

Die Bürstenplatte 4 mit den daran angespritzten Teilen der Isolierstoff-Durchführung 2 mit eingespritzter Anschlußleitung 6,7 und dem über die Halterungsstege 31-34 angespritzten Dichtring 3 ist im Lagerschild 5 im Sinne einer vormontierbaren Bauteileinheit fixierbar, wobei die Isolierstoff-Durchführung 2 durch ihr kraftschlüssiges Einstecken in die axiale Einstecköffnung des Anlagerandes 52 des Lagerschildes 5 diese Fixierung unterstützt. Zur zusätzlichen Dichtung liegt die in die Einstecköffnung des Lagerschildes 5 eingesteckte Isolierstoff-Durchführung mit einem Dichtrand 21 außen am Motorgehäuse 1 an.

## Patentansprüche

1. Elektromotor in geschlossener Bauart, insbesondere feuchtigkeitsdichter Kommutatormotor für einen elektrischen Kraftfahrzeug-Hilfsantrieb, mit einer Bürstenplatte (4) und mit einer zwischen einer Stirnseite des Motorgehäuses (1) und dem axial vorgelagerten Lagerschild (5) dichtend andrückbarer, an der Bürstenplatte (4) vormontierbarer Dichtung (Dichtring 3) mit angegossener einstückiger Isolierstoff-Durchführung (2) mit darin eingegossenen nach außen führenden elektrische Anschlußleitungen (6,7), **dadurch gekennzeichnet**, daß im Sinne eines als einziges Bauteil herstellbaren und in einem Arbeitsgang montierbaren Guß- bzw. Spritzgußteils die Isolierstoff-Durchführung (2) direkt sowie der Dichtring (3) außerhalb seines von der Isolierstoff-Durchführung (2) ausgehenden tangentialen Verlaufs über Halterungsstege (31-34) in Abstand zu der Bürstenplatte (4) an diese angespritzt sind und dem Dichtring (3) eine umlaufende Ringnut (51) in dem Lagerschild (5) zugeordnet ist.

2. Elektromotor nach Anspruch 1, **gekennzeichnet durch** eine am Fuße der Ringnut (51) umlaufende Wulsterhöhung.

3. Elektromotor nach Anspruch 1 oder 2, **gekennzeichnet durch** einen gegen das Motorgehäuse (1) axial vorstehenden Anlagerand (52) an dem Lagerschild (5) mit einer stirnseitig offenen Einstecköffnung für die Isolierstoff-Durchführung (2).

4. Elektromotor nach einem der Ansprüche 1-3, **gekennzeichnet durch** einen stirnseitigen, radial abgebogenen Anlagerand (14) an dem Motorgehäuse (1) zur Lagefixierung und/oder dichtenden Anlage des Lagerschildes (5).

5. Elektromotor nach einem der Ansprüche 1-4, **dadurch gekennzeichnet**, daß die Bürstenplatte (4) mit der Isolierstoff-Durchführung (2) und dem Dichtring (3) an dem Lagerschild (5), insbesondere im Sinne einer vormontierbaren Bauteileinheit, fixierbar sind.

6. Elektromotor nach einem der Ansprüche 1-5, **dadurch gekennzeichnet**,daß als Motorgehäuse (1) ein topfförmiges, axial an seinem einen Ende geschlossenes und an seinem anderen Ende durch den Lagerschild (5) unter Zwischenlage des Dichtringes (3) dicht abschließbares Gehäuse vorgesehen ist.

7. Elektromotor nach einem der Ansprüche 1-6, **dadurch gekennzeichnet**, daß der Dichtring (3) einen rechteckigen, insbesondere quadratischen, Querschnitt aufweist.

8. Elektromotor nach einem der Ansprüche 1-7, **dadurch gekennzeichnet**, daß die Bürstenplatte (4) aus einem Polyamid und die Isolierstoff-Durchführung (2) sowie der Dichtring (3) und die Halterungsstege (31-34) aus einem Elastomer bestehen.

## Claims

1. Electric motor with an enclosed construction, in particular damp-proof commutator motor for an electric auxiliary drive for a motor vehicle, having a brush plate (4) and having a seal (sealing ring 3) which can be pressed in a sealing fashion between one end side of the motor housing (1) and the end shield (5) which is mounted axially in front and can be premounted on the brush plate (4) with cast-on integral bushing (2) for the insulating material with cast-in, outwardly leading, electrical connection lines (6, 7), characterized in that the bushing (2) for the insulating material is injection moulded directly onto the said brush plate (4) and the sealing ring (3) is injection moulded onto the said brush plate (4) outside its tangential course, starting from the bushing (2) for the insulating material, via securing webs (31-34) at a distance from the said brush plate (4) in the manner of a cast part or injection moulded part which can be produced as a single component and mounted in one work operation, and a circumferential annular groove (51) in the end shield (5) is assigned to the sealing ring (3).

2. Electric motor according to Claim 1, characterized by a bead elevation which runs around at the base of the annular groove (51).

3. Electric motor according to Claim 1 or 2, characterized by a contact edge (52), protruding axially against the motor housing (1), on the end shield (5) with a plug-in opening, open at the end side, for the bushing (2) for the insulating material.

4. Electric motor according to one of Claims 1-3, characterized by an end-side, radially bent contact edge (14) on the motor housing (1) for positionally fixing the end shield (5) and/or for the end shield (5) to bear against in a sealing fashion.

5. Electric motor according to one of Claims 1-4, characterized in that the brush plate (4) with the bushing (2) for the insulating material and the sealing ring (3) can be fixed on the end shield (5), in particular in the manner of a premountable constructional unit.

6. Electric motor according to one of Claims 1-5, characterized in that a pot-shaped housing which is axially enclosed at one end and can be closed off in a sealed fashion at its other end by the end shield (5) with the intermediate positioning of the sealing ring (3) is provided as motor housing (1).

7. Electric motor according to one of Claims 1-6, characterized in that the sealing ring (3) has a rectangular, in particular quadratic, cross-section.

8. Electric motor according to one of Claims 1-7, characterized in that the brush plate (4) consists of a polyamide, and the brushing (2) for the insulating material and also the sealing ring (3) and the securing webs (31-34) consist of an elastomer.

## Revendications

1. Moteur électrique de type fermé, notamment moteur à collecteur étanche à l'humidité pour un dispositif d'entraînement électrique auxiliaire de véhicule automobile, comportant une plaque porte-balais (4) et une garniture d'étanchéité (bague d'étanchéité 3), qui peut être serrée de façon étanche entre une face frontale du carter (1) du moteur et le flasque de palier (5) axialement en avant qui peut être prémonté sur la plaque porte-balais (4) et qui comporte une traversée (2) en matériau isolant moulée d'une seule pièce, dans laquelle sont enrobées des lignes électriques de raccordement (6, 7) sortant à l'extérieur, caractérisé par le fait qu'en vue d'avoir une pièce coulée ou moulée par injection, qui peut être fabriquée sous la forme d'un élément d'une seule pièce et qui peut être montée en une étape opératoire, la traversée (2) en matériau isolant peut être fixée directement sur la plaque porte-balais (4) par moulage par injection et la bague d'étanchéité (3) peut être fixée, en dehors de sa partie tangentielle issue de la traversée en matériau isolant (2), par moulage par injection à la plaque porte-balais (4), par l'intermédiaire de barrettes de retenue (31 à 34) à distance de la plaque porte-balais, et qu'une gorge annulaire circonférentielle (51) située dans le flasque de palier (5) est associée à la bague d'étanchéité (3).

2. Moteur électrique suivant la revendication 1, caractérisé par une partie surélevée circonférentielle en forme de bourrelet située dans le fond de la gorge annulaire (51).

3. Moteur électrique suivant la revendication 1 ou 2, caractérisé par un bord d'application (52), qui fait saillie axialement en direction du carter (1) du moteur et est situé sur le flasque de palier (5) et comporte une ouverture, qui est ouverte frontalement et qui est destinée à enfiler la traversée en matériau isolant (2).

4. Moteur électrique suivant l'une des revendications 1 à 3, caractérisé par un bord frontal d'application, coudé radialement (14) qui est prévu sur le carter (1) du moteur pour la fixation en position et/ou l'application étanche du flasque de palier (5).

5. Moteur électrique suivant l'une des revendications 1 à 4, caractérisé par le fait que la plaque porte-balais (4) munie de la traversée en matériau isolant (2) et de la bague d'étanchéité (3) peut être fixée sur le flasque de palier (5), notamment en vue d'obtenir une unité de construction pouvant être préassemblée.

6. Moteur électrique suivant l'une des revendications 1 à 5, caractérisé par le fait qu'il est prévu, comme carter (1) du moteur, un carter en forme de pot, qui est fermé axialement à l'une des extrémités et qui peut être fermé de façon étanche à l'autre extrémité par le flasque de palier (5), avec interposition de la bague d'étanchéité (3).

7. Moteur électrique suivant l'une des revendications 1 à 6, caractérisé par le fait que la bague d'étanchéité (3) a une section transversale rectangulaire, notamment carrée.

8. Moteur électrique suivant l'une des revendications 1 à 7, caractérisé par le fait que la plaque porte-balais (4) est en polyamide et que la traversée en matériau isolant (2) ainsi que la bague d'étanchéité (3) et les barrettes de retenue (31 à 34) sont en un élastomère.
